# EUROPEAN PATENT APPLICATION

(11) **EP 4 394 568 A1**
(43) Date of publication of application: **03.07.2024**
(21) Application number: 22873109.7
(22) Date of filing: 18.08.2022
(51) Int. Cl.: G06F 3/04817, G06F 3/0486, G06F 3/0488, G06F 9/451

(54) **METHOD FOR DISPLAYING EXECUTION SCREEN OF APPLICATION, AND ELECTRONIC DEVICE FOR SUPPORTING SAME**

(30) Priority: 24.09.2021 KR 20210126564
(71) Applicant: Samsung Electronics Co., Ltd., Suwon-si, Gyeonggi-do 16677 (KR)
(72) Inventor: JANG, Donghoon, Suwon-si Gyeonggi-do 16677 (KR); PARK, Jinhyun, Suwon-si Gyeonggi-do 16677 (KR); JANG, Jungwook, Suwon-si Gyeonggi-do 16677 (KR); JUNG, Gonghwan, Suwon-si Gyeonggi-do 16677 (KR); CHOI, Yujin, Suwon-si Gyeonggi-do 16677 (KR)
(74) Representative: HGF
(86) International application number: PCT/KR2022/012365
(87) International publication number: WO 2023/048404

(57) **Abstract**

According to various embodiments, an electronic device comprises a display and a processor, wherein the processor may be set to: display a first execution screen of a first application on the display; in response to a request to display an execution screen of a second application, determine whether the first application is required to be displayed as an icon; on the basis that the first application is required to be displayed as an icon, display, display an icon, showing a partial area of the first execution screen, on a second execution screen of the second application while displaying the second execution screen on the display; and on the basis that the first application is not required to be displayed as an icon, display the second execution screen of the second application on the display.

## Description

### [Technical Field]

Various embodiments relate to a method of displaying an execution screen of an application and an electronic device supporting the same.

### [Background Art]

When electronic devices such as smartphones or tablet PCs are used, there are requirements for simultaneously executing many applications. However, since the size of a screen of a mobile terminal is small compared to a monitor of a computer, there are restrictions in displaying many applications are simultaneously displayed on the screen.

As a method by which a mobile terminal simultaneously executes many applications, a split-window function or a popup-window function may be provided. The split-window function is a scheme of splitting a display of the mobile terminal according to a predetermined layout and displaying an execution screen of each application in each area. The popup-window function is a scheme of displaying an execution screen of a second application on an execution screen of a first application in the form of a popup window, and moving and displaying the popup window that displays the execution screen of the second application as necessary.

### [Detailed Description of the Invention]

### [Technical Problem]

When an electronic device executes a game application together with another application, which is not the game application, (for example, an Internet application or a messenger application), there is a disadvantage in that an execution screen of the game application hides a partial area of an execution screen of the other application, and displaying and controlling the screen of the other application is not easy as the hidden area is wider. For example, when the execution screen of the game application is displayed on an execution screen of the Internet application in the form of a popup window, some of the execution screen of the Internet application is hidden according to the size of the popup window. Further, in the case of some game applications, the game may enter a pause state unintentionally as the display scheme of the execution screen is changed or the execution screen is changed to a minimized state.

### [Technical Solution]

According to various embodiments, an electronic device includes a display and a processor, wherein the processor is configured to display a first execution screen of a first application on the display, identify whether the first application is required to be displayed as an icon in response to a request for displaying an execution screen of a second application, based on that the first application is required to be displayed as the icon, display an icon for displaying a partial area of the first execution screen on a second execution screen while displaying the second execution screen of the second application on the display, and based on that the first application is not required to be displayed as the icon, display the second execution screen of the second application on the display.

According to various embodiments, a method of operating an electronic device includes displaying a first execution screen of a first application on a display of the electronic device, identify whether the first application is required to be displayed as an icon in response to a request for displaying an execution screen of a second application, based on that the first application is required to be displayed as the icon, displaying an icon for displaying a partial area of the first execution screen on a second execution screen while displaying the second execution screen of the second application on the display, and based on that the first application is not required to be displayed as the icon, displaying the second execution screen of the second application on the display.

### [Advantageous Effects]

A method of simultaneously executing a plurality of applications and simultaneously displaying a plurality of execution screens can be provided by providing a method of displaying execution screens of applications and an electronic device for supporting the same.

### [Brief Description of Drawings]

FIG. 1 is a block diagram illustrating an electronic device within a network environment according to various embodiments.
FIG. 2 is a flowchart illustrating an operation of an electronic device according to various embodiments.
FIG. 3 is a diagram illustrating an operation of an electronic device according to various embodiments.
FIG. 4 is a flowchart illustrating an operation of an electronic device according to various embodiments.
FIG. 5 is a flowchart illustrating an operation of an electronic device according to various embodiments.
FIG. 6 is a diagram illustrating an operation of an electronic device according to various embodiments.
FIG. 7 is a flowchart illustrating an operation of an electronic device according to various embodiments.
FIG. 8 is a diagram illustrating an operation of an electronic device according to various embodiments.
FIG. 9 is a flowchart illustrating an operation of an electronic device according to various embodiments.
FIG. 10 is a diagram illustrating an operation of an electronic device according to various embodiments.
FIG. 11 is a diagram illustrating an operation of an electronic device according to various embodiments.
FIG. 12 is a flowchart illustrating an operation of an electronic device according to various embodiments.
FIG. 13 is a diagram illustrating an operation of an electronic device according to various embodiments.
FIG. 14 is a diagram illustrating an operation of an electronic device according to various embodiments.
FIG. 15 is a diagram illustrating an operation of an electronic device according to various embodiments.

### [Mode for Carrying out the Invention]

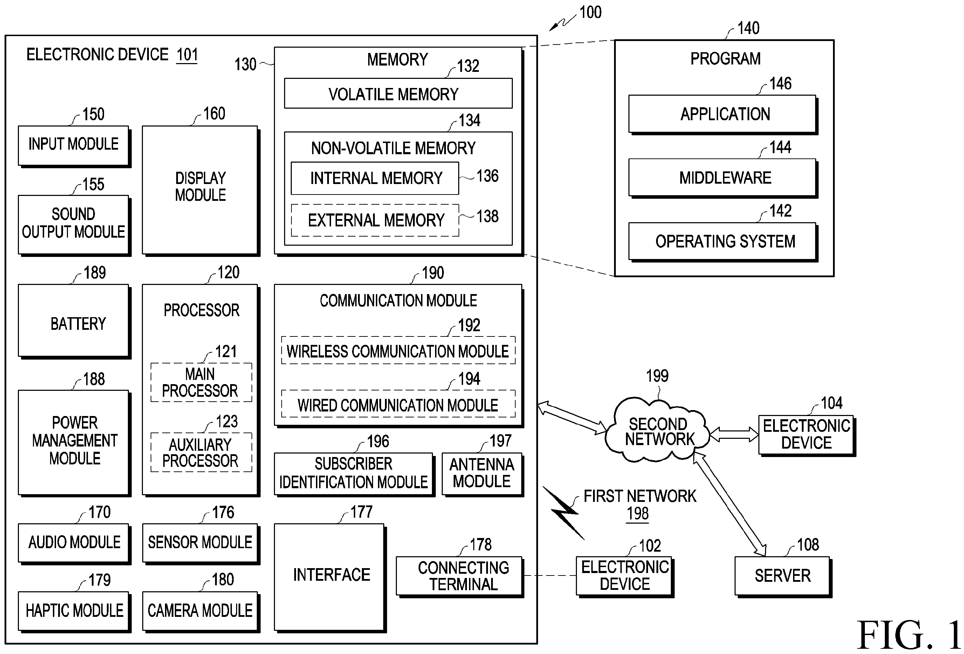

FIG. 1 is a block diagram illustrating an electronic device 101 in a network environment 100 according to embodiments.

Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing leMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

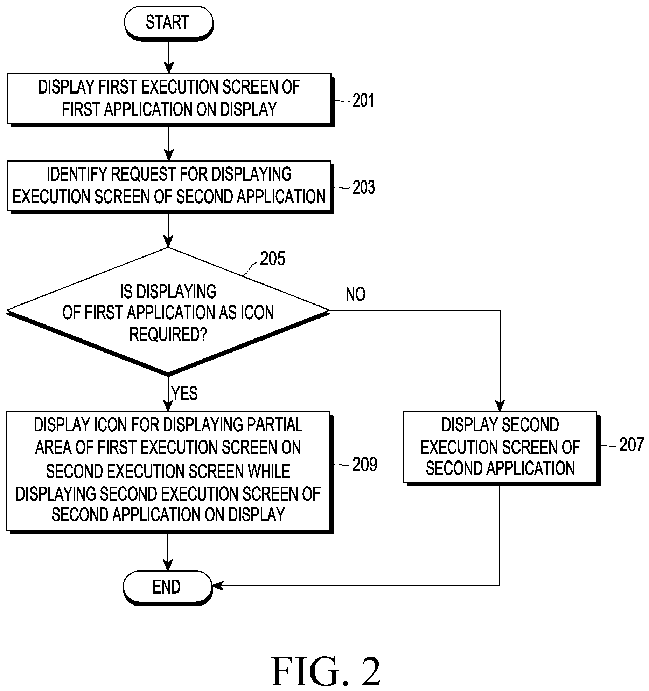

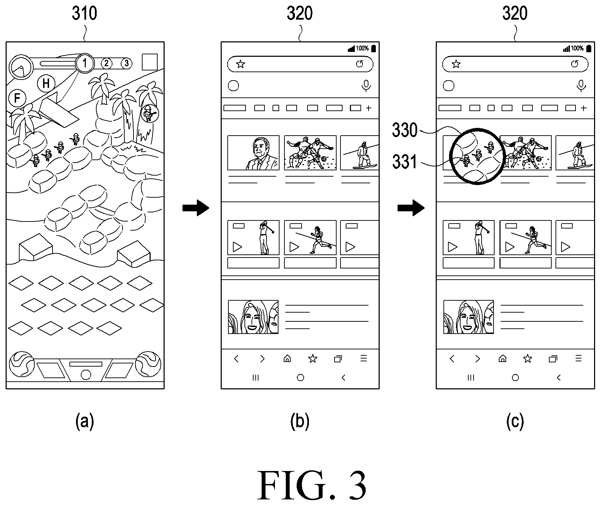

FIG. 2 is a flowchart illustrating an operation of an electronic device according to various embodiments. FIG. 2 is described with reference to FIG. 3. FIG. 3 is a diagram illustrating an operation of an electronic device according to various embodiments.

Referring to FIG. 2, in operation 201, the electronic device 101 (for example, the processor 120 of the electronic device 101) according to various embodiments may display a first execution screen of a first application on the display module 160. For example, referring to FIG. 3, the electronic device 101 may display an execution screen 310 of a game application. For example, the electronic device 101 may display the execution screen of the game application in a partial area of the display module 160. Alternatively, for example, the electronic device 101 may display the execution screen of the game application on the full screen. The full screen may mean that an execution screen of a specific application is displayed in an entire area of the area configured to display the screen on the display module 160 of the electronic device 101. FIG. 3 illustrates that the display module 160 of the electronic device 101 configures a single plane, but it is only an example, and there is no limitation on the forma of the display module 160 and division of the display area. For example, in the case of the electronic device 101 including, for example, the display module 160 in a foldable display form or a rollable display form, it may be understood that a display type of the screen varies depending on the form of the display module 160. For example, when the electronic device 101 includes the display module 160 in the foldable display form, a game application may be displayed as the entire screen in one of a plurality of areas divided according to a folding type of the foldable display. For convenience of description, the game application is described as an example, but it is only an example, and there is no limitation on an application type. For example, the electronic device 101 may execute various applications such as a gallery application, a video application, a mobile trading system (MTS) application, an Internet application, a memo application, or a music application and control the display module 160 to display an execution screen thereof.

In operation 203, the electronic device 101 according to various embodiments may identify a request for displaying an execution screen of a second application. For example, referring to FIG. 3, the electronic device 101 may identify a request for displaying an execution screen 320 of the second application while an execution screen 310 of the first application is displayed. For example, the electronic device 101 may identify a request for executing the Internet application while the game application is executed. Alternatively, for example, the electronic device 101 may identify the request for displaying the home screen while displaying the execution screen of the game application. There is no limitation in the request for displaying or the request for executing. A request for displaying an execution screen of a specific application may be a request for displaying the execution screen of the specific application on the display module 160. The request for executing the specific application may be a request for running the specific application. The specific application may be executed in the electronic device 101 according to the execution request, in which case, the execution screen of the specific application may be or may not be displayed on the display module 160. The displaying of the execution screen of the corresponding application on the display module 160 during execution of the specific application may be execution in the foreground. The non-displaying of the execution screen of the corresponding application on the display module 160 during execution of the specific application may be execution in the background. For example, the electronic device 101 may execute a music application in the foreground, on the basis of a request for executing the music application and reproduce music while displaying an execution screen of the music application on the display module 160. Thereafter, while the music application is executed and music is reproduced, the electronic device 101 may execute an Internet application in the foreground, based on a request for executing the Internet application, display an execution screen of the Internet application on the display module 160, execute the music application in the background, and continuously reproduce music without displaying the execution screen of the music application on the display module 160. The electronic device 101 may execute the music application in the foreground, based on a request for displaying the execution screen of the music application, and display the execution screen of the music application on the display module 160.

In operation 205, the electronic device 101 according to various embodiments may identify whether a first application is required to be displayed as an icon. For example, referring to FIG. 3, while an execution screen 310 of a first application is displayed on the display module 160, the electronic device 101 may identify whether the first application is required to be displayed as an icon, based on that a request for displaying an execution screen 320 of a second application is identified. For example, the electronic device 101 may identify whether the first application is required to be displayed as the icon, based on a type of the first application. For example, the electronic device 101 may identify that the first application is required to be displayed as the icon, based on that the type of the first application is a type (for example, a game application) required to be displayed as the icon. There are no restrictions on the type designated to be displayed as the icon, and the type of the application displayed as the icon may be designated, changed, or added by a user input. For example, the electronic device 101 may identify that the first application is required to be displayed as the icon, based on that the type of the first application is a game application or a music application. According to an embodiment, the electronic device 101 may identify whether the type of the first application is an application type of which displaying as the icon is required based on information stored in connection with the first application. For example, the information stored in connection with the first application may be information stored in the memory 130 of the electronic device 101, information stored in a storage space of an application providing a specific service (for example, a game manager service) among applications of the electronic device 101, or information provided by the first application, and there are no restrictions on the information type. According to an embodiment, the electronic device 101 may perform operation 207, based on that the first application is not required to be displayed as the icon, and may perform operation 209, based on that the first application is required to be displayed as icon.

In operation 207, the electronic device 101 according to various embodiments may display an execution screen of the second application, based on that the first application is not required to be displayed as the icon. For example, in FIGs. 3A and 3B, the electronic device 101 may display the second execution screen 320 of the second application on the display module 160 in response to a request for displaying the execution screen of the second application while displaying the first execution screen 310 of the first application and may not display the execution screen of the first application on the display module 160, based on that the first application is not required to be displayed as the icon. In this case, the electronic device 101 may execute the first application in the background according to settings.

In operation 209, the electronic device 101 according to various embodiments may display an icon (for example, 330 of FIG. 3) for displaying a partial area (for example, 331 of FIG. 3) of the first execution screen (for example, 310 of FIG. 3) of the first application on the second execution screen (for example, 320 of FIG. 3) while displaying the second execution screen (for example, 320 of FIG. 3) of the second application, based on that the first application is required to be displayed as the icon. For example, referring to FIG. 3C, the electronic device 101 may display the second execution screen 320 of the second application and display the icon 330 for displaying the partial area 331 of the first execution screen 310 of the first application on the second execution screen 320. An icon (for example, 330 of FIG. 3) may be an object in a preset size and a preset shape. For example, the icon (for example, 330 of FIG. 3) may be a circular object floating on the screen of the display module 160, but it is only an example and there are no restrictions on the size and the shape of the icon. Referring to FIGs. 3A, 3B, and 3C, it is illustrated that, after displaying the first execution screen 310 of the first application, the electronic device 101 displays the second execution screen 320 of the second application and then displays the icon 330 of displaying a partial area 331 of the first application on the second execution screen 320 of the second application, but it is only an example, and the electronic device 101 may display the screen corresponding to FIG. 3C after displaying the screen corresponding to FIG. 3A. Referring to FIG. 3C, the partial area (for example, 331) displayed on the icon (for example, 330) may be a partial area of the first execution screen 310 of the first application. For example, the partial area 331 of the first execution screen 310 displayed on the icon 330 of FIG. 3C would have been the partial area 331 of the first execution screen 310 displayed instead of the icon 330 at the location where the icon 330 is displayed if, after the electronic device 101 displays the first execution screen 310 of the first application in FIG. 3A, the electronic device 101 had continuously displayed the first execution screen 310 of the first application without displaying the second execution screen 320 of the second application. For example, referring to FIG. 3C, the electronic device 101 may display the second execution screen 320 of the second application as the full screen and display the partial area 331 of the first execution screen 330 of the first application on the second execution screen 320 as the icon 330. According to an embodiment, in FIG. 3C, it may be understood that both the first application and the second application are executed in the foreground. For example, while displaying the first execution screen 310 of the first application, the electronic device 101 may display the second execution screen 320 of the second application as the full screen and display the partial area 331 of the first execution screen 330 of the first application on the second execution screen 320 without stopping execution of the first application in response to a request for displaying the execution screen of the second application. For example, in FIG. 3C, the user may identify the partial area 331 of the first execution screen 310 of the first application through the icon 330 and simultaneously identify a partial area of the second execution screen 320 of the second application through an area other than the area in which the icon 330 is displayed. For example, in FIG. 3C, the electronic device 101 may control the operation of the first application, based on a user input for an area corresponding to the icon 330 (for example, the partial area 331 of the first execution screen 310 of the first application) and control the operation of the second application, based on a user input for a display area of the second execution screen 320 of the second application displayed in the area other than the icon 330. According to an embodiment, in FIG. 3C, it may be understood that the first execution screen 310 of the first application and the second execution screen 320 of the second application are displayed on respective layers. For example, in FIG. 3C, the electronic device 101 may display the second execution screen 320 of the second application on a first layer, display the partial area 331 of the first execution screen 310 of the first application in the form of the icon 330 on a second layer, and control the display module 160 to overlappingly display the first layer and the second layer. According to an embodiment, the electronic device 101 may control transparency of the displayed icon 330, and a partial area of the second execution screen 320 of the second application may be hidden according to the icon 330 and transparency of the partial area 310 of the first execution screen 310 displayed on the icon 330, and the partial area of the second execution screen 320 or the icon 330 (for example, the partial area 310 of the first execution screen 310) may be overlappingly displayed.

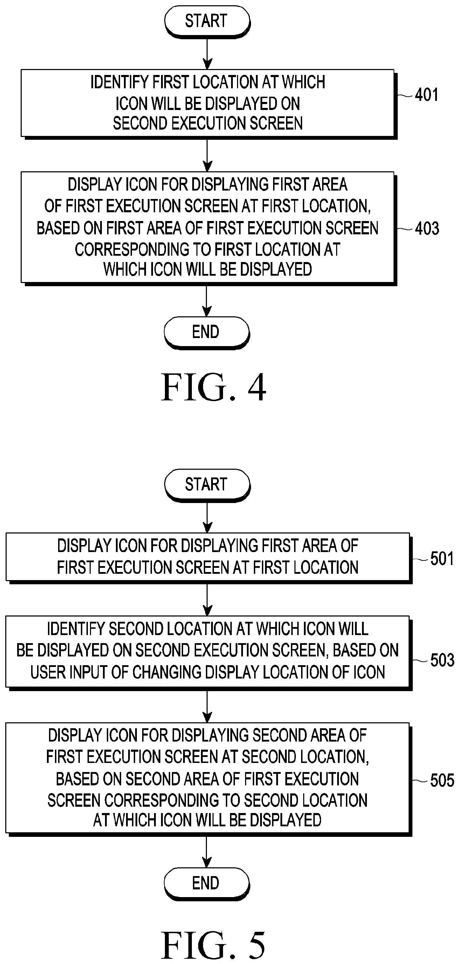

FIG. 4 is a flowchart illustrating an operation of an electronic device according to various embodiments. FIG. 4 is described with reference to FIG. 3.

Referring to FIG. 4, in operation 401, the electronic device 101 (for example, the processor 120 of the electronic device 101) according to various embodiments may identify a location (for example, a first location) at which an icon (for example, 330 of FIG. 3) will be displayed on a second execution screen (for example, 320 of FIG. 3) of a second application. For example, the electronic device 101 may identify the location (for example, the first location) at which the icon (for example, 330 of FIG. 3) will be displayed on the second execution screen (for example, 320 of FIG. 3) of the second application in order to display a partial area (for example, 331 of FIG. 3) of a first execution screen (for example, 310 of FIG. 3) of a first application on an icon (for example, 330 of FIG. 3) or in the form of the icon (for example, 330 of FIG. 3). For example, referring to FIG. 3, while the first execution screen 310 of the first application is displayed, the electronic device 101 may identify the location (for example, the first location) at which the icon 330 for displaying a partial area (for example, 331) of the first execution screen 310 of the first application will be displayed in response to a request for displaying the execution screen of the second application. The electronic device 101 may identify the location at which the icon (for example, 330) will be displayed, based on information related to the first application or a user input, and a method by which the electronic device 101 identifies the location at which the icon (for example, 330) will be displayed is described below.

In operation 403, the electronic device 101 according to various embodiments may identify the first location at which the icon (for example, 330 of FIG. 3) will be displayed, identify a location of a first area (for example, 331 of FIG. 3) of the first execution screen (for example, 310 of FIG. 3) of the first application corresponding to the first location, and display the icon (for example, 330 of FIG. 3) for displaying the first area (for example, 331 of FIG. 3) of the first execution screen (for example, 310 of FIG. 3) at the first location. For example, referring to FIG. 3, the electronic device 101 may identify the first location at which the icon 330 will be displayed on the second execution screen 320 of the second application, identify the first area 331 of the first execution screen 310 of the first application corresponding to the first location, and display the icon 330 for displaying the first area 331 of the first execution screen 310 at the first location on the second execution screen 320 of the second application.

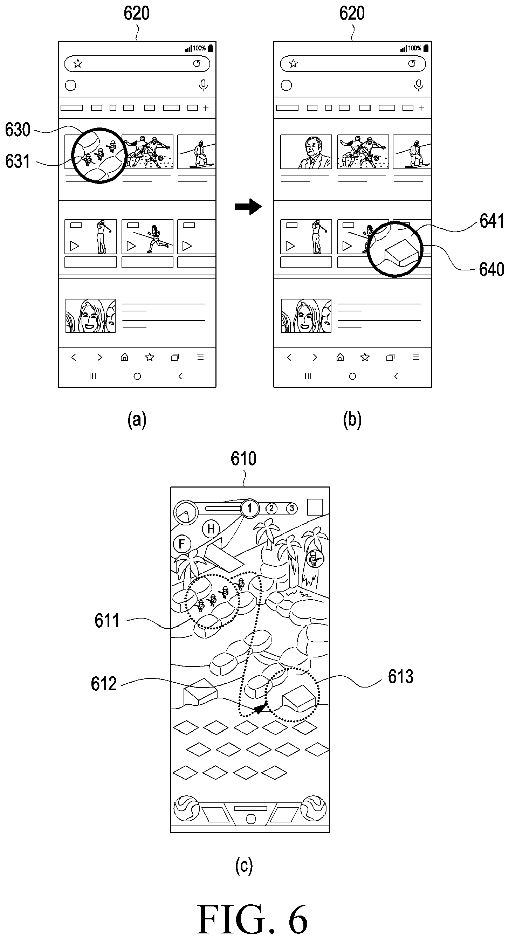

FIG. 5 is a flowchart illustrating an operation of an electronic device according to various embodiments. FIG. 5 is described with reference to FIG. 6. FIG. 6 is a diagram illustrating an operation of an electronic device according to various embodiments.

FIG. 6 illustrates an embodiment in which the electronic device 101 (for example, the processor 120 of the electronic device 101) displays an execution screen 610 of a first application (for example, an execution screen 620 of a second application (for example, an Internet application). The electronic device 101 may display an icon 630 for displaying a first area 631 of the first execution screen 610 of the first application at a first location on the second execution screen 620 of the second application in FIG. 6A, and then display an icon 640 for displaying a second area 641 of the first execution screen 610 of the first application at a second location on the second execution screen 620 of the second application, based on a user input (For example, a touch drag input 612 for the icon 630) for changing the location of the icon 630 in FIG. 6B.

Referring to FIG. 5, in operation 501, the electronic device 101 (for example, the processor 120 of the electronic device 101) according to various embodiments may display the icon (for example, 630 of FIG. 6) for displaying the first area (for example, 611 or 631 of FIG. 6) of the first execution screen (for example, 610 of FIG. 6) of the first application at the first location. For example, referring to FIG. 6, while displaying the first execution screen 610 of the first application in FIG. 6C and displaying the second execution screen 620 of the second application, based on a request for displaying the execution screen of the second application in FIG. 6A, the electronic device 101 may display the icon 630 for displaying the first area 611 or 631 of the first execution screen 610 of the first application at the first location on the second execution screen 620.

In operation 503, the electronic device 101 according to various embodiments may identify a second location at which an icon (for example, 640 of FIG. 6) will be displayed on the second execution screen 620, based on a user input (for example, a touch drag input (for example, 612 of FIG. 6) for changing the displaying location of the icon (for example, 630 of FIG. 6). For example, referring to FIG. 6, the electronic device 101 may identify the second location at which the icon 640 will be displayed on the second execution screen 620 of the second application in FIG. 6B, based on the touch drag input 612 for the icon 630 displayed at the first location on the second execution screen 620 of the second application in FIG. 6A.

In operation 505, the electronic device 101 according to various embodiments, may identify the second location at which the icon (for example, 640 of FIG. 6) will be displayed, identify the location of the second area (for example, 613 or 641 of FIG. 6) of the first execution screen (for example, 610 of FIG. 6) of the first application corresponding to the second location, and display the icon (for example, 640 of FIG. 6) for displaying the second area (for example, 613 or 641 of FIG. 6) of the first execution screen (for example, 610 of FIG. 6) at the second location. For example, referring to FIG. 6, the electronic device 101 may identify the second location at which the icon 640 will be displayed on the second execution screen 620 of the second application, identify the location of the second area 613 or 641 of the first execution screen 610 of the first application corresponding to the second location, and display the icon 640 for displaying the second area 613 or 641 of the first execution screen 610 at the second location of the second execution screen 620 of the second application. For example, the electronic device 101 may display the partial areas (for example, 611 and 613) of the first execution screen 610 of the first application corresponding to the locations at which the icons (for example, 630 and 640) are displayed on the icons (for example, 630 and 640) while the display locations of the icons (for example, 630 and 640) are changed.

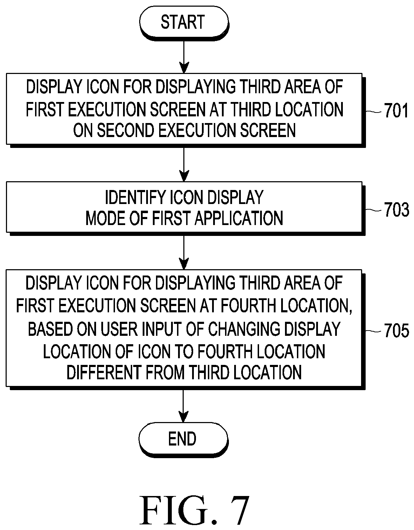

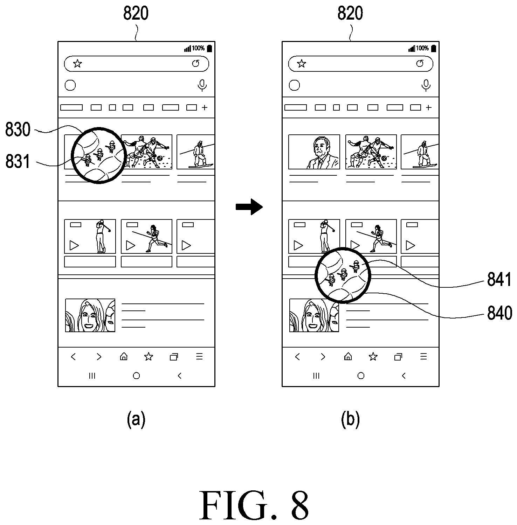

FIG. 7 is a flowchart illustrating an operation of an electronic device according to various embodiments. FIG. 7 is described with reference to FIG. 8. FIG. 8 is a diagram illustrating an operation of an electronic device according to various embodiments.

FIG. 8 is a diagram illustrating an embodiment in which partial areas 831 and 841 of the execution screen of the first application displayed on icons 830 and 840 are identically maintained even when the display locations of the icons 830 and 840 are changed.

Referring to FIG. 7, in operation 701, the electronic device 101 (for example, the processor 120 of the electronic device 101) according to various embodiments may display an icon (for example, 830 of FIG. 8) for displaying a third area (for example, 831 of FIG. 8) of the first execution screen of the first application at a third location on a second execution screen (for example, 820 of FIG. 8) of a second application.

In operation 703, the electronic device 101 according to various embodiments may identify an icon display mode of the first application, based on a user input (for example, a touch drag input) for the icon (for example, 830 of FIG. 8). For example, the electronic device 101 may perform operation 705, based on that the icon display mode of the first application is identified as a second mode (for example, an icon moving and display area fixing mode) described below.

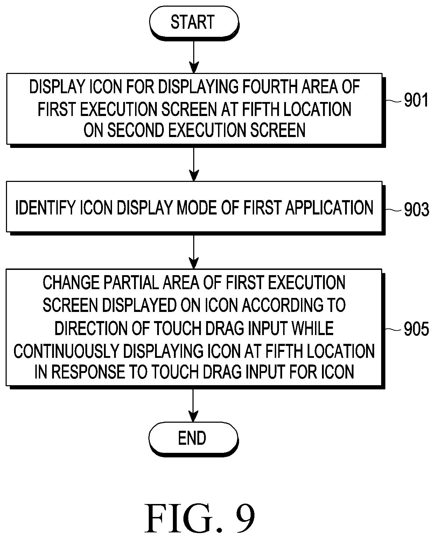

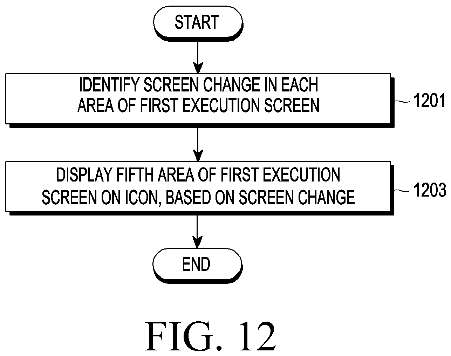

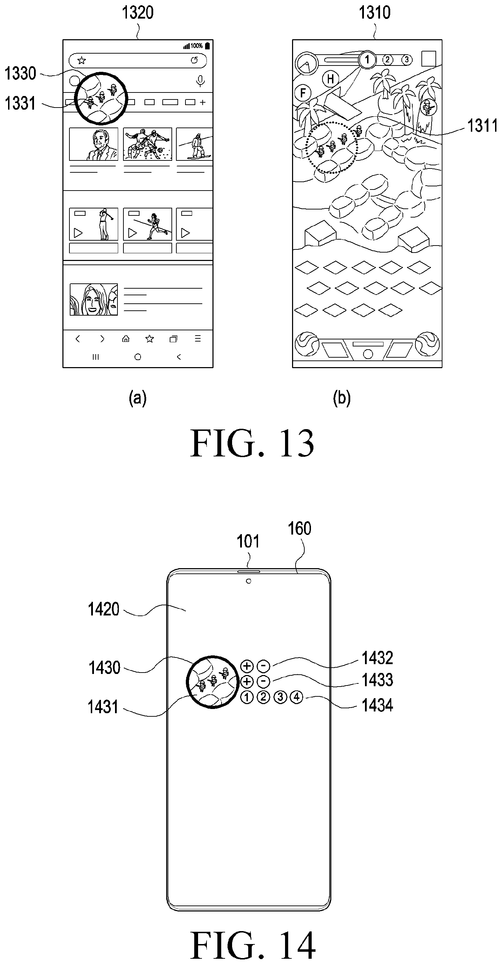

The icon display mode may be a mode related to a scheme for changing a display location of the icon and location of a partial area of the execution screen of the first application displayed on the icon according to a user input (for example, a touch drag input) for the displayed icon when the first application is displayed in the form of the icon. According to an embodiment, when the icon display mode is a first mode (for example, an icon moving and display area moving mode), the electronic device 101 may change the display location of the icon and change the location of the partial area of the execution screen of the first application displayed on the icon, based on a user input for the icon (for example, a touch drag input for the icon). For example, an embodiment in which the icon display mode is the first mode (for example, the icon moving and display area moving mode) has been described with reference to FIG. 6. According to an embodiment, when the icon display mode is the second mode (for example, the icon moving and display area fixing mode), the electronic device 101 may change the display location of the icon, based on a user input for the icon (for example, a touch drag input for the icon) but fix the location of the partial area of the execution screen of the first application displayed on the icon. For example, an embodiment in which the icon display mode is the second mode (for example, the icon moving and display area fixing mode) is described with reference to FIG. 8 and operation 705 of FIG. 7. According to an embodiment, when the icon display mode is a third mode (for example, an icon fixing and display area moving mode), the electronic device 101 may fix the display location of the icon but change the location of the partial area of the execution screen of the first application displayed on the icon, based on a user input for the icon (for example, a touch drag input for the icon). An embodiment in which the icon display mode is the third mode (for example, the icon fixing and display area moving mode) is described with reference to FIGs. 9 to 11. According to an embodiment, when the icon display mode is a fourth mode (for example, an auto detection mode), the electronic device 101 may determine an area displayed on the icon, based on a screen change in a plurality of areas of the execution screen of the first application. For example, an embodiment in which the icon display mode is the fourth mode (for example, the auto detection mode) is described with reference to FIGs. 12 and 13. The types of the icon display modes are only examples, and there are no restrictions on the types of the icon display modes.

In operation 705, the electronic device 101 according to various embodiments may display an icon for displaying a third area (for example, an area which is the same as the third area of operation 701) of the first execution screen of the first application at a fourth location in response to a user input (for example, a touch drag input) for changing the display location of the icon to the fourth location different from the third location (for example, the third location of operation 701). For example, referring to FIG. 8, after displaying the icon 830 for displaying the third area 831 of the first execution screen of the first application at the third location on the second execution screen 820 of the second application in FIG. 8A, the electronic device 101 may display the icon 840 for displaying the same third area 841 in the first execution screen of the first application at the fourth location different from the third location on the second execution screen 820, based on a user input (for example, a touch drag input) for the icon 830.

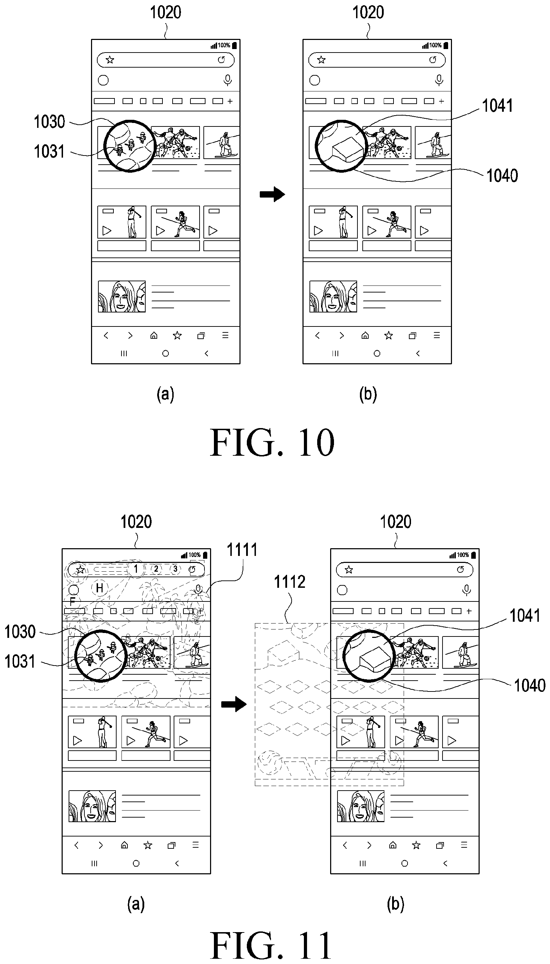

FIG. 9 is a flowchart illustrating an operation of an electronic device according to various embodiments. FIG. 9 is described with reference to FIGs. 10 and 11. FIG. 10 is a diagram illustrating an operation of an electronic device according to various embodiments. FIG. 11 is a diagram illustrating an operation of an electronic device according to various embodiments.

FIGs. 10 and 11 are diagrams illustrating an embodiment in which display locations of icons 1030 and 1040 are fixed and partial areas 1031 and 1041 of the execution screen of the first application displayed on the icons 1030 and 1040 are changed.

Referring to FIG. 9, in operation 901, the electronic device 101 (for example, the processor 120 of the electronic device 101) according to various embodiments may display an icon (for example, 1030 of FIG. 10) for displaying a fourth area (for example, 1031 of FIG. 10) of the first execution screen of the first application at a fifth location on the second execution screen (for example, 1020 of FIG. 10) of the second application.

In operation 903, the electronic device 101 according to various embodiments may identify an icon display mode of the first application, based on a user input (for example, a touch drag input) for the icon (for example, 1030 of FIG. 10). For example, the electronic device 101 may perform operation 905, based on that an icon display mode of the first application is identified as the third mode (for example, the icon fixing and display area moving mode).

In operation 905, the electronic device 101 according to various embodiments may change the partial area (for example, 1041 of FIG. 10) of the first execution screen of the first application displayed on the icon (for example, 1040 of FIG. 10) according to an input direction of the user input (for example, the touch drag input) while continuously displaying the icon (for example, 1040 of FIG. 10) at the fifth location (for example, the fifth location of operation 901) in response to the user input (for example, the touch drag input) for the icon (for example, 1030 of FIG. 10). For example, referring to FIG. 11, the electronic device 101 may display, on the changed icon 1040, the area 1041 different from the partial area 1031 of the first execution screen 1111 of the first application displayed on the previous icon 1030 by continuously displaying the icons 1030 and 1040 at the fixed locations and changing the display locations of the first execution screens 1111 and 1112 of the first application according to the input direction of the user input (for example, the touch drag input) in response to the user input (for example, the touch drag input).

FIG. 12 is a flowchart illustrating an operation of an electronic device according to various embodiments. FIG. 12 is described with reference to FIG. 13. FIG. 13 is a diagram illustrating an operation of an electronic device according to various embodiments.

FIG. 13 is a diagram illustrating an embodiment in which, when an icon display mode is the fourth mode (for example, the auto detection mode), the electronic device 101 determines an area displayed on an icon 1330, based on a screen change in each area of the execution screen of the first application.

Referring to FIG. 12, the electronic device 101 (for example, the processor 120 of the electronic device 101) according to various embodiments may identify the screen change in each area of the first execution screen (for example, 1310 of FIG. 13) of the first application in operation 1201, and display the icon 1330 for displaying partial areas (for example, 1311 and 1331) of the first execution screen (for example, 1310 of FIG. 13) of the first application on the second execution screen 1320, based on the screen change in operation 1203.

For example, after displaying the first execution screen 1310 of the first application (for example, a game application) in FIG. 13B, the electronic device may display the second execution screen 1320 of the second application and display the partial area 1331 of the first execution screen of the first application on the second execution screen, based on a request for displaying the execution screen of the second application (for example, an Internet application). At this time, the electronic device 101 may identify a screen change in each area of the first execution screen of the first application while continuously monitoring the entire area of the first execution screen of the first application. For example, the electronic device 101 may identify an area having the largest screen change in the first execution screen of the first application and display the area (for example, fifth area 1311 or 1331) having the largest screen change on the icon 1330 of FIG. 13A.

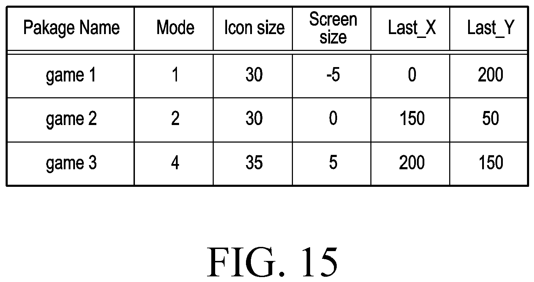

FIG. 14 is a diagram illustrating an operation of an electronic device according to various embodiments. FIG. 14 is described with reference to FIG. 15. FIG. 15 is a diagram illustrating an operation of an electronic device.

According to an embodiment, referring to FIG. 14, the electronic device 101 may display an icon 1430 on a screen 1420 of the display module 160 and display a partial area 1431 of a first execution screen of a first application on the icon 1430. For example, the electronic device 101 may display a first object 1432 for changing the size of the icon 1430, a second object 1433 for changing the size of the partial area 1431 of the first execution screen of the first application displayed on the icon 1430, and/or a third object 1434 for changing an icon display mode of the first application. For example, the electronic device 101 may display the first object 1432, the second object 1433, and/or the third object 1434, based on a user input (for example, a long press input) for the icon 1430. According to an embodiment, the electronic device 101 may adjust the size of the displayed icon 1430, based on a user input (for example, a touch input) for the first object 1432 for changing the size of the icon 1430. According to an embodiment, the electronic device 101 may adjust the size of the partial area 1431 of the first execution screen of the first application displayed on the icon 1430, based on a user input (for example, a touch input) for the second object 1433 for changing the size of the partial area 1431 of the first execution screen of the first application displayed on the icon 1430. According to an embodiment, the electronic device 101 may change the icon display mode (for example, the first mode, the second mode, the third mode, and/or the fourth mode) of the first application, based on a user input (for example, a touch input) for the third object 1434 for changing the icon display mode of the first application.

FIG. 15 is a diagram illustrating a scheme for storing an icon display mode, an icon size, a size of a screen displayed on an icon, and a display location of an icon for each of at least one application. For example, referring to FIG. 15, the electronic device 101 may store information on displaying of an icon related to an application for each of a plurality of applications (for example, a plurality of game applications). For example, in connection with a first game application, the electronic device 101 may store information indicating that an icon display mode is the first mode (for example, the icon moving and display area moving mode), the size of an icon to be displayed is 30, magnification of a partial area of an execution screen of the first game application to be displayed on the icon is -5 magnification (for example, magnification 5% smaller than the basic magnification (0 magnification)), and a location at which the icon will be displayed is a point spaced apart from a specific point of the screen (for example, an upper left point of the screen) of the display module 160 by 0 in a horizontal axis (for example, the x axis) and by 200 in a vertical axis (for example, the y axis). For example, in connection with a second game application, the electronic device 101 may store information indicating that an icon display mode is the second mode (for example, the icon moving and display area fixing mode), the size of an icon to be displayed is 30, magnification of a partial area of an execution screen of the second game application to be displayed on the icon is the basic magnification (for example, positive magnification), and a location at which the icon will be displayed is a point spaced apart from a specific point of the screen (for example, an upper left point of the screen) of the display module 160 by 150 in a horizontal axis (for example, the x axis) and by 50 in a vertical axis (for example, the y axis). For example, in connection with a third game application, the electronic device 101 may store information indicating that an icon display mode is the fourth mode (for example, the auto detection mode), the size of an icon to be displayed is 35, magnification of a partial area of an execution screen of the third game application to be displayed on the icon is -5 magnification (for example, magnification 5% smaller than the basic magnification (0 magnification)), and a location at which the icon will be displayed is a point spaced apart from a specific point of the screen (for example, an upper left point) of the display module 160 by 200 in a horizontal axis (for example, the x axis) and by 150 in a vertical axis (for example, the y axis). According to an embodiment, when a specific application is displayed in the form of an icon, the electronic device 101 may identify an icon display mode, the size of the icon, the size (or magnification) of a screen displayed on the icon, and a display location of the icon, based on the information described with reference to FIG. 15. According to an embodiment, as described above, the electronic device 101 may change displaying related to the icon 1430, based on a user input for the object (for example, 1432, 1433, or 1434) illustrated in FIG. 14 and store the changed information for each application as illustrated in FIG. 15.

It can be understood by those skilled in the art that various embodiments disclosed in the specification are organically applied within an applicable range.

According to various embodiments, an electronic device (for example, the electronic device 101) may include a display (for example, the display module 160) and a processor (for example, the processor 120), and the processor may be configured to display a first execution screen of a first application on the display, identify whether the first application is required to be displayed as an icon in response to a request for displaying an execution screen of a second application, based on that the first application is required to be displayed as the icon, display an icon for displaying a partial area of the first execution screen on a second execution screen while displaying the second execution screen of the second application on the display, and based on that the first application is not required to be displayed as the icon, display the second execution screen of the second application on the display.

According to various embodiments, the processor may be configured to, based on that the first application is required to be displayed as the icon, identify a first location at which the icon will be displayed on the second execution screen, and based on a first area of the first execution screen corresponding to the first location, display the icon for displaying the first area of the first execution screen at the first location.

According to various embodiments, the processor may be configured to, based on a user input of changing a display location of the icon, identify a second location at which the icon will be displayed on the second execution screen, and based on a second area of the first execution screen corresponding to the second location, display the icon for displaying the second area of the first execution screen at the second location.

According to various embodiments, the processor may be configured to, based on a touch drag input for the icon, change a location at which the icon is displayed, and display, on the icon, the partial area of the first execution screen corresponding to the location at which the icon is displayed while the display location of the icon is changed

According to various embodiments, the processor may be configured to display the icon for displaying a third area of the first execution screen at a third location on the second execution screen, and based on an icon display mode of the first application, display the icon for displaying the third area of the first execution screen at a fourth location in response to a user input of changing the display location of the icon to the fourth location different from the third location.

According to various embodiments, the processor may be configured to display the icon for displaying a fourth area of the first execution screen at a fifth location of the second execution screen, and based on an icon display mode of the first application, change the partial area of the first execution screen displayed on the icon according to a direction of a touch drag input while continuously displaying the icon at the fifth location in response to the touch drag input for the icon.

According to various embodiments, the processor may be configured to identify a screen change in each area of the first execution screen, and based on the screen change, display a fifth area of the first execution screen on the icon.

According to various embodiments, the processor may be configured to display a first object for changing a size of the icon, a second object for changing a size of the partial area of the first execution screen displayed on the icon, and a third object for changing an icon display mode of the first application.

According to various embodiments, the processor may be configured to identify a display location of the icon, a size of the icon, a size of the partial area of the first execution screen displayed on the icon, and an icon display mode of the first application, based on information stored in connection with the first application.

According to various embodiments, the processor may be configured to identify that the first application is required to be displayed as the icon, based on that the first application is a game application.

According to various embodiments, a method of operating an electronic device (for example, the electronic device 101) may include an operation of displaying a first execution screen of a first application on a display (for example, the display module 160) of the electronic device, an operation of identifying whether the first application is required to be displayed as an icon in response to a request for displaying an execution screen of a second application, an operation of, based on that the first application is required to be displayed as the icon, displaying an icon for displaying a partial area of the first execution screen on a second execution screen while displaying the second execution screen of the second application on the display, and an operation of, based on that the first application is not required to be displayed as the icon, displaying the second execution screen of the second application on the display.

According to various embodiments, the method may further include an operation of, based on that the first application is required as the icon, identifying a first location at which the icon will be displayed on the second execution screen, and the operation of displaying the icon for displaying the partial area of the first execution screen on the second execution screen may include an operation of, based on a first area of the first execution screen corresponding to the first location, displaying the icon for displaying the first area of the first execution screen at the first location.

According to various embodiments, the method may further include an operation of, based on a user input of changing a display location of the icon, identifying a second location at which the icon will be displayed on the second execution screen and an operation of, based on a second area of the first execution screen corresponding to the second location, displaying the icon for displaying the second area of the first execution screen at the second location.

According to various embodiments, the method may further include an operation of, based on a touch drag input for the icon, changing a location at which the icon is displayed, and the operation of displaying the icon for displaying the partial area of the first execution screen on the second execution screen may include an operation of displaying, on the icon, the partial area of the first execution screen corresponding to the location at which the icon is displayed while the display location of the icon is changed.

According to various embodiments, the operation of displaying the icon for displaying the partial area of the first execution screen on the second execution screen may include an operation of displaying the icon for displaying a third area of the first execution screen at a third location on the second execution screen, and the method may further include an operation of, based on an icon display mode of the first application, displaying the icon for displaying the third area of the first execution screen at a fourth location in response to a user input of changing the display location of the icon to the fourth location different from the third location.

According to various embodiments, the operation of displaying the icon for displaying the partial area of the first execution screen on the second execution screen may include an operation of displaying the icon for displaying a fourth area of the first execution screen at a fifth location on the second execution screen, and the method may further include an operation of changing the partial area of the first execution screen displayed on the icon according to a direction of a touch drag input while continuously displaying the icon at the fifth location in response to the touch drag input for the icon, based on an icon display mode of the first application.

According to various embodiments, the method may further include an operation of identifying a screen change in each area of the first execution screen, and the operation of displaying the icon for displaying the partial area of the first execution screen on the second execution screen may include an operation of displaying a fifth area of the first execution screen on the icon, based on the screen change.

According to various embodiments, the method may further include an operation of displaying a first object for changing a size of the icon, a second object for changing a size of the partial area of the first execution screen, and a third object for changing an icon display mode of the first application on the display.

According to various embodiments, the method may further include an operation of identifying a display location of the icon, a size of the icon, a size of the partial area of the first execution screen displayed on the icon, and an icon display mode of the first application, based on information stored in connection with the first application.

According to various embodiments, the method may further include an operation of identifying that the first application is required to be displayed as the icon, based on that the first application is a game application.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display; and
a processor,
wherein the processor is configured to:
display a first execution screen of a first application on the display;
identify whether the first application is required to be displayed as an icon in response to a request for displaying an execution screen of a second application;
based on that the first application is required to be displayed as the icon, display an icon for displaying a partial area of the first execution screen on a second execution screen while displaying the second execution screen of the second application on the display; and
based on that the first application is not required to be displayed as the icon, display the second execution screen of the second application on the display.

2. The electronic device of claim 1, wherein the processor is configured to:
based on that the first application is required to be displayed as the icon, identify a first location at which the icon will be displayed on the second execution screen; and
based on a first area of the first execution screen corresponding to the first location, display the icon for displaying the first area of the first execution screen at the first location.

3. The electronic device of claim 2, wherein the processor is configured to:
based on a user input of changing a display location of the icon, identify a second location at which the icon will be displayed on the second execution screen; and
based on a second area of the first execution screen corresponding to the second location, display the icon for displaying the second area of the first execution screen at the second location.

4. The electronic device of claim 3, wherein the processor is configured to:
based on a touch drag input for the icon, change a location at which the icon is displayed; and
display, on the icon, the partial area of the first execution screen corresponding to the location at which the icon is displayed while the display location of the icon is changed.

5. The electronic device of claim 1, wherein the processor is configured to:
display the icon for displaying a third area of the first execution screen at a third location on the second execution screen; and
based on an icon display mode of the first application, display the icon for displaying the third area of the first execution screen at a fourth location in response to a user input of changing the display location of the icon to the fourth location different from the third location.

6. The electronic device of claim 1, wherein the processor is configured to:
display the icon for displaying a fourth area of the first execution screen at a fifth location of the second execution screen; and
based on an icon display mode of the first application, change the partial area of the first execution screen displayed on the icon according to a direction of a touch drag input while continuously displaying the icon at the fifth location in response to the touch drag input for the icon.

7. The electronic device of claim 1, wherein the processor is configured to:
identify a screen change in each area of the first execution screen; and
based on the screen change, display a fifth area of the first execution screen on the icon.

8. The electronic device of claim 1, wherein the processor is configured to display a first object for changing a size of the icon, a second object for changing a size of the partial area of the first execution screen displayed on the icon, and a third object for changing an icon display mode of the first application.

9. The electronic device of claim 1, wherein the processor is configured to identify a display location of the icon, a size of the icon, a size of the partial area of the first execution screen displayed on the icon, and an icon display mode of the first application, based on information stored in connection with the first application.

10. The electronic device of claim 1, wherein the processor is configured to identify that the first application is required to be displayed as the icon, based on that the first application is a game application.

11. A method of operating an electronic device, the method comprising:
displaying a first execution screen of a first application on a display of the electronic device;
identifying whether the first application is required to be displayed as an icon in response to a request for displaying an execution screen of a second application;
based on that the first application is required to be displayed as the icon, displaying an icon for displaying a partial area of the first execution screen on a second execution screen while displaying the second execution screen of the second application on the display; and
based on that the first application is not required to be displayed as the icon, displaying the second execution screen of the second application on the display.

12. The method of claim 11, further comprising, based on that the first application is required to be displayed as the icon, identifying a first location at which the icon will be displayed on the second execution screen,
wherein the displaying of the icon for displaying the partial area of the first execution screen on the second execution screen comprises, based on a first area of the first execution screen corresponding to the first location, displaying the icon for displaying the first area of the first execution screen at the first location.

13. The method of claim 12, further comprising:
based on a user input of changing a display location of the icon, identifying a second location at which the icon will be displayed on the second execution screen; and
based on a second area of the first execution screen corresponding to the second location, displaying the icon for displaying the second area of the first execution screen at the second location.

14. The method of claim 13, further comprising, based on a touch drag input for the icon, changing a location at which the icon is displayed,
wherein the displaying of the icon for displaying the partial area of the first execution screen on the second execution screen comprises displaying, on the icon, the partial area of the first execution screen corresponding to the location at which the icon is displayed while the display location of the icon is changed.

15. The method of claim 11, wherein the displaying of the icon for displaying the partial area of the first execution screen on the second execution screen comprises displaying the icon for displaying a third area of the first execution screen at a third location on the second execution screen, and
wherein the method further comprising, based on an icon display mode of the first application, displaying the icon for displaying the third area of the first execution screen at a fourth location in response to a user input of changing the display location of the icon to the fourth location different from the third location.
